# FASCICULE DE BREVET EUROPEEN

(11) **EP 2 674 639 B1**
(45) Date de publication et mention de la délivrance du brevet: **09.09.2020**
(21) Numéro de dépôt: 13169421.8
(22) Date de dépôt: 28.05.2013
(51) Int. Cl.: F16D 65/18, F16D 125/40, F16D 121/24

(54) **Actionneur électromécanique**
Elektromechanisches Stellglied
Electromechanical actuator

(30) Priorité: 14.06.2012 FR 1255587
(43) Date de publication de la demande: 18.12.2013
(73) Titulaire: Safran Landing Systems, 78140 Vélizy-Villacoublay (FR)
(72) Inventeur: Chicot, Philippe, 78140 Velizy-Villacoublay (FR)
(74) Mandataire: Lavialle, Bruno François Stéphane

(56) Documents cités:
- EP-A1- 2 103 830
- WO-A1-02/057649
- FR-A1- 2 377 558
- US-A- 4 476 772
- US-A1- 2008 135 349
- US-B1- 6 290 235
- US-B1- 6 607 059

## Description

L'invention concerne un actionneur électromécanique d'un frein d'une roue d'aéronef comportant deux joints à lèvre montés pour assurer l'étanchéité de l'actionneur.

### ARRIERE PLAN DE L'INVENTION

Un système de freinage dit « électrique », destiné à freiner des roues freinées d'un aéronef, comporte de nombreux équipements électriques, électromécaniques et mécaniques, parmi lesquels certains sont soit très complexes techniquement, soit installés dans des environnements particulièrement sévères.

Un tel système est connu par exemple du document EP 2 103 830 A1.

Les équipements électriques comprennent, selon l'architecture du système, des organes de puissances pour mettre en forme et transmettre vers les freins l'énergie électrique nécessaire à leur activation, et des organes de commande pour commander le freinage et assurer des fonctions telles qu'une fonction d'anti-patinage. Ces équipements électriques peuvent comprendre de très nombreux composants électroniques, et ont une fiabilité théorique relativement faible.

Chaque roue freinée est munie d'un frein comportant une pile de disques, généralement fabriqués en carbone et empilés autour d'un tube de torsion, et des actionneurs électromécaniques portés par un porte-actionneurs et commandés pour appliquer un effort de freinage sur la pile de disques en vue d'exercer sur la roue un couple de freinage tendant à ralentir l'aéronef. Les actionneurs électromécaniques sont alimentés électriquement par les organes de puissance et commandés par les organes de commande. Ils comportent un moteur électrique adapté à déplacer un poussoir en regard de la pile de disques.

L'environnement du frein est particulièrement rigoureux. Lors d'un freinage, la température des disques peut passer brusquement d'une température très basse (parfois inférieure à -50 degrés Celsius) à une température très haute (parfois supérieure à 1000 degrés Celsius) et les contraintes mécaniques (vibrations, chocs) sont particulièrement sévères. Le frein est soumis en outre à de nombreuses projections: détritus de la piste, sable et poussières, eau pressurisée lors d'un lavage, grêle, etc. Cet environnement peut avoir un impact sur la fiabilité des équipements composant le frein.

### OBJET DE L'INVENTION

L'invention a pour objet d'améliorer la fiabilité d'un système de freinage électrique.

### RESUME DE L'INVENTION

En vue de la réalisation de ce but, on propose un actionneur électromécanique de freinage destiné à appliquer sélectivement un effort de freinage sur des éléments de friction d'un frein d'une roue d'aéronef, l'actionneur électromécanique comportant un corps dans lequel un poussoir est monté pour coulisser longitudinalement sous l'action d'un moteur électrique en saillant du corps au travers d'une ouverture pratiquée dans celui-ci. Selon l'invention, l'actionneur comporte deux joints à lèvre qui coopèrent avec le poussoir et qui sont disposés de sorte que l'un des joints à lèvre s'oppose à l'entrée de particules dans l'intérieur du corps par l'ouverture pratiquée dans le corps, et que l'autre des joints à lèvre s'oppose à la sortie par ladite ouverture de fluide contenu dans l'intérieur du corps.

Cette disposition des joints à lèvre permet d'augmenter de manière importante la fiabilité de l'actionneur électromécanique, et donc celle d'un système de freinage dans lequel il est intégré.

En effet, les joints à lèvre empêchent, d'une part, toute entrée de particules dans l'actionneur par l'ouverture du corps, et notamment des particules de carbone provenant des éléments de friction du frein, de sable, d'eau, de poussière, et d'autre part, toute fuite de fluide lubrifiant de composants internes de l'actionneur. L'intérieur de l'actionneur est donc préservé, et la fiabilité de l'actionneur est améliorée.

### BREVE DESCRIPTION DES DESSINS

L'invention sera mieux comprise à la lumière de la description qui suit en référence aux figures des dessins annexés parmi lesquelles :
- la figure 1 est une vue en coupe d'un actionneur électromécanique,
- la figure 2 est une vue en coupe d'un actionneur électromécanique selon un mode de réalisation de l'invention.

### DESCRIPTION DETAILLEE DE L'INVENTION

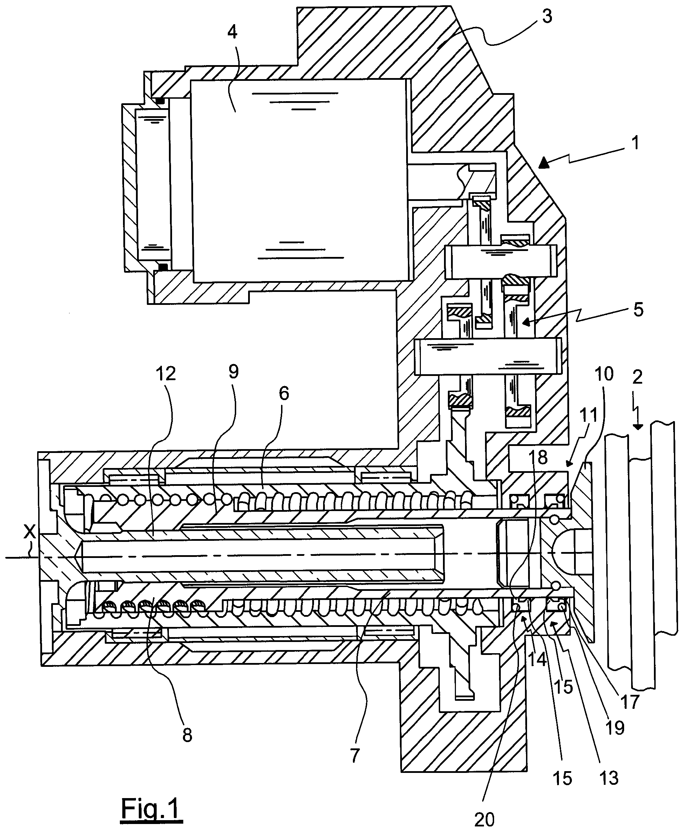

Un actionneur électromécanique 1 , visible à la figure 1, est destiné à appliquer sélectivement un effort de freinage sur des éléments de friction d'un frein d'aéronef, ici une pile de disques 2. Cet actionneur 1 comporte un corps 3 fixé à un porte-actionneurs du frein grâce à des moyens de fixation non représentés.

A l'intérieur de ce corps sont agencés un moteur électrique 4, un réducteur 5 à trois étages transmettant le mouvement de rotation d'un arbre du moteur à un écrou 6 monté tournant dans le corps 3 et qui coopère avec une vis 7 formant poussoir. Le poussoir 7 est fileté sur une première longueur 8 pour coopérer par l'intermédiaire d'une liaison vis/écrou avec l'écrou 6. Le poussoir comporte par ailleurs une partie courante cylindrique 9 d'axe X portant à son extrémité un patin 10.

Ainsi, sous l'action du moteur électrique 4, le poussoir 7 coulisse selon l'axe X en saillant du corps 3 au travers d'une ouverture 11 pratiquée dans le corps 3 de sorte que le patin 10 vienne au contact de la pile de disques 2. Un dispositif d'anti-rotation comprend ici un doigt central cannelé 12 coopérant avec des cannelures internes du poussoir 7 empêchant toute rotation du poussoir 7 autour de l'axe X.

Tout ceci est bien connu et n'est rappelé que pour donner le contexte de l'invention.

L'actionneur électromécanique comporte en outre deux joints racleur 13, 14 à double lèvre qui s'étendent ici en série entre le corps 3 et le poussoir 7, à proximité de l'ouverture 11 pratiquée dans le corps 3. Les deux joints racleurs sont logés dans des gorges du corps. Ainsi, ces deux joints 13, 14 sont fixes et sont disposés pour racler le poussoir lors de ses coulissements.

Chaque joint racleur 13, 14 comporte une lèvre racleuse 15, 16 et une lèvre d'étanchéité 17, 18 maintenue en pression par un joint torique 19, 20. La lèvre d'étanchéité 17 du joint 13 le plus proche de l'ouverture 11 est orientée de manière à assurer une étanchéité de l'extérieur de l'actionneur 1 vers l'intérieur. La lèvre d'étanchéité 18 de l'autre joint 14 est, quant à elle, orientée de manière à assurer une étanchéité de l'intérieur vers l'extérieur. Cet agencement des joints permet d'empêcher toute entrée de particules (poussières, eau, etc.) dans l'actionneur, et toute sortie de fluide lubrifiant.

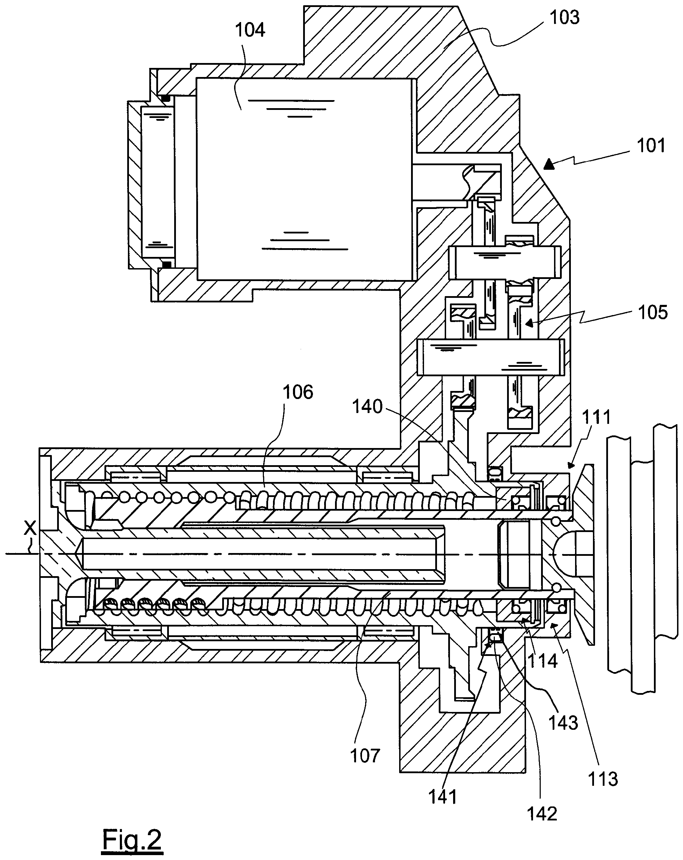

Dans un mode de réalisation de l'invention, visible à la figure 2, l'actionneur électromécanique de l'invention 101 comporte un corps 103 dans lequel sont agencés un moteur électrique 104, un réducteur 105, un écrou 106 et un poussoir 107. Le moteur 104, le réducteur 105 et le poussoir 107 sont strictement identiques à ceux du premier mode de réalisation. Le corps 103 est identique à celui du premier mode de réalisation, à la différence près que l'agencement des joints est différents.

Le corps 103 comporte un premier joint racleur 113 à double lèvre, qui s'étend entre le corps 103 et le poussoir 107, dans un agencement similaire à celui du joint le plus proche de l'ouverture dans le premier mode de réalisation. L'écrou 106 est ici muni d'une cage 140 entourant le poussoir 107 à proximité d'une ouverture 111 pratiquée dans le corps 103. La cage 140 comporte une gorge dans laquelle est logé le deuxième joint racleur 114 à double lèvre, qui s'étend entre la cage 140 de l'écrou et le poussoir 107. Le premier joint 113 est donc fixe tandis que le deuxième joint 114 tourne avec l'écrou. L'agencement relatif des lèvres d'étanchéité et racleuses des deux joints 113, 114 est similaire à celui du premier mode de réalisation. Cet agencement des joints permet d'empêcher toute entrée de particules dans le corps 103 de l'actionneur 101, et toute sortie de fluide par l'espace s'étendant entre l'écrou 106 et le poussoir 107. Pour empêcher toute sortie de fluide par l'espace s'étendant entre le corps 103 et l'écrou 106, un joint d'étanchéité dynamique additionnel 141, ici formé d'un élément d'étanchéité 142 muni de lèvres de contact et maintenu en pression par un joint torique 143, s'étend entre le corps 103 et l'écrou 106. Ce joint d'étanchéité dynamique additionnel 141, logé dans une gorge du corps, est donc fixe et réalise l'étanchéité entre le corps fixe et l'écrou rotatif.

L'invention n'est pas limitée aux modes de réalisation particuliers qui viennent d'être décrit, mais, bien au contraire, englobe toute variante entrant dans le cadre de l'invention tel que défini par les revendications.

Bien que l'on ait utilisé des joints munis d'une lèvre racleuse et d'une lèvre d'étanchéité, il est bien sûr possible d'utiliser des joints ne comportant pas de lèvre racleuse, ou bien des joints comportant un nombre de lèvres différent (et notamment des joints comportant une unique lèvre).

Bien que l'on ait choisi d'illustrer l'invention en prévoyant que le joint le plus proche de l'ouverture empêche l'entrée de particules et l'autre la sortie de fluide, il est bien sûr possible d'inverser cette configuration.

Il est aussi possible de choisir un joint dynamique différent pour le troisième joint du deuxième mode de réalisation (simple joint torique, joint à lèvres, à chicane, etc.).

## Revendications

1. Actionneur électromécanique destiné à appliquer sélectivement un effort de freinage sur des éléments de friction (2) d'un frein d'une roue d'aéronef, l'actionneur électromécanique comportant un corps (103) dans lequel un poussoir (107) est monté pour coulisser longitudinalement sous l'action d'un moteur électrique (104) en saillant du corps au travers d'une ouverture (111) pratiquée dans celui-ci, le poussoir coopérant par une liaison vis/écrou avec un écrou (106) entraîné par le moteur électrique, l'actionneur comportant deux joints à lèvre (113, 114) qui coopèrent avec le poussoir et qui sont disposés de sorte que l'un des joints à lèvre (113) s'oppose à l'entrée de particules dans l'intérieur du corps par l'ouverture pratiquée dans le corps, et que l'autre des joints à lèvre (114) s'oppose à la sortie par ladite ouverture de fluide contenu dans l'intérieur du corps, le corps (103) comportant l'un des joints à lèvre (113), qui s'étend entre le corps (103) et le poussoir (107), l'écrou étant muni d'une cage (140) entourant le poussoir (107) et comportant une gorge dans laquelle est logé l'autre des joints à lèvre (114), la cage (140) entourant le poussoir (107) à proximité de l'ouverture (111) pratiquée dans le corps (103) .

2. Actionneur électromécanique selon la revendication 1, dans lequel au moins un des joints à lèvre comporte une lèvre racleuse.

3. Actionneur électromécanique selon la revendication 1, comportant en outre un joint supplémentaire (141) s'étendant entre le corps (103) et l'écrou (106).

## Patentansprüche

1. Elektromechanischer Aktor, der dazu bestimmt ist, selektiv eine Bremskraft auf Reibelemente (2) einer Bremse eines Luftfahrzeugrades aufzubringen, wobei der elektromechanische Aktor ein Gehäuse (103) umfasst, in dem ein Stößel (107) so gelagert ist, dass er unter der Wirkung eines Elektromotors (104) in Längsrichtung verschiebbar ist und dabei aus dem Gehäuse durch eine in demselben ausgebildete Öffnung (111) vorsteht, wobei der Stößel über eine Schraube/Mutter-Verbindung mit einer Mutter (106) zusammenwirkt, die von dem Elektromotor angetrieben wird, wobei der Aktor zwei Lippendichtungen (113, 114) umfasst, die mit dem Stößel zusammenwirken und die derart angeordnet sind, dass sich eine der Lippendichtungen (113) dem Eintritt von Partikeln in das Innere des Gehäuses durch die in dem Gehäuse ausgebildete Öffnung widersetzt, und dass sich die andere der Lippendichtungen (114) dem Austritt von in dem Inneren des Gehäuses enthaltenem Fluid durch die Öffnung widersetzt, wobei das Gehäuse (103) eine der Lippendichtungen (113) umfasst, die sich zwischen dem Gehäuse (103) und dem Stößel (107) erstreckt, wobei die Mutter mit einem Käfig (140) versehen ist, der den Stößel (107) umgibt und eine Nut umfasst, in der die andere der Lippendichtungen (114) aufgenommen ist, wobei der Käfig (140) den Stößel (107) in der Nähe der in dem Gehäuse (103) ausgebildeten Öffnung (111) umgibt.

2. Elektromechanischer Aktor nach Anspruch 1, bei dem mindestens eine der Lippendichtungen eine Abstreiflippe umfasst.

3. Elektromechanischer Aktor nach Anspruch 1, ferner umfassend eine zusätzliche Dichtung (141), die sich zwischen dem Gehäuse (103) und der Mutter (106) erstreckt.

## Claims

1. Electromechanical actuator intended selectively to apply a braking force to friction elements (2) of a brake of an aircraft wheel, the electromechanical actuator including a body (103) in which a push rod (107) is mounted to slide longitudinally under the action of an electric motor (104) projecting from the body through an opening (111) formed in the latter, the push rod co-operating via a screw/nut connection with a nut (106) driven by the electric motor, the actuator including two lip seals (113, 114) that co-operate with the push rod and are disposed so that one of the lip seals (113) opposes entry of particles into the interior of the body via the opening formed in the body and the other lip seal (114) opposes exit via said opening of fluid contained in the interior of the body, the body (103) including one lip seal (113) that extends between the body (103) and the push rod (107), the nut being provided with a cage (140) surrounding the push rod (107) and including a groove in which is housed the other lip seal (114), the cage (140) surrounding the push rod (107) in the vicinity of the opening (111) formed in the body (103).

2. Electromechanical actuator according to claim 1, in which at least one of the lip seals includes a scraper lip.

3. Electromechanical actuator according to claim 1 further including an additional seal (141) extending between the body (103) and the nut (106).
